# EUROPEAN PATENT APPLICATION

(11) **EP 4 769 740 A1**
(43) Date of publication of application: **01.07.2026**
(21) Application number: 25851893.5
(22) Date of filing: 30.07.2025
(51) Int. Cl.: H01M 50/289, H01M 50/317, H01M 50/367, H01M 50/249

(54) **BATTERY PACK**

(30) Priority: 07.08.2024 KR 20240105536
(71) Applicant: LG Energy Solution, Ltd., Seoul 07335 (KR)
(72) Inventor: KIM, Kwang-Mo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2025/011373
(87) International publication number: WO 2026/034891

(57) **Abstract**

Disclosed is a battery pack. The battery pack includes a case providing a space therein and having a pack cover; a battery module positioned inside the case and having a top plate facing the pack cover; and a spacer positioned between the top plate and the pack cover.

## Description

### TECHNICAL FIELD

The present disclosure relates to a battery pack.

The present application claims priority to Korean Patent Application No. 10-2024-0105536 filed on August 7, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure that may secure the space between the battery module and the pack cover when a thermal event occurs.

In addition, the present disclosure is directed to providing a structure capable of securing a venting space when a thermal event occurs.

In addition, the present disclosure is directed to providing a structure capable of guiding the flow of a venting gas when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing a space therein and having a pack cover; a battery module positioned inside the case and having a top plate facing the pack cover; and a spacer positioned between the top plate and the pack cover.

In addition, the spacer may be provided on an upper surface of the top plate or an inner surface of the pack cover.

In addition, the battery pack may have a venting hole formed in the top plate.

In addition, the spacer may include a first part containing a metal material; and a second part provided on an upper surface or a lower surface of the first part and having elasticity.

In addition, the spacer may be compressed between the top plate and the pack cover.

In addition, the case may include a base plate; a side wall installed on the base plate; and a venting device installed at the side wall.

In addition, the spacer may extend toward the side wall or the venting device.

In addition, the spacer may be provided in plurality, and the plurality of spacers may be arranged along a direction toward the side wall or the venting device.

In addition, the battery module may be provided in plurality, and the spacer may be elongated to be positioned between the plurality of battery modules and the pack cover.

In addition, the battery pack may further comprise a fastening member configured to pass through the pack cover and fastened to the spacer.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the discharge of the gas or flame may be appropriately controlled.

According to at least one of the embodiments of the present disclosure, the space between the battery module and the pack cover may be secured when a thermal event occurs.

According to at least one of the embodiments of the present disclosure, a venting space may be secured when a thermal event occurs.

According to at least one of the embodiments of the present disclosure, when a thermal event occurs, the flow of a venting gas may be guided.

According to at least one of the embodiments of the present disclosure, the electrical safety of the battery pack may be improved.

According to at least one of the embodiments of the present disclosure, an explosion of a battery pack may be prevented when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is a drawing showing the battery module of FIG. 3.
FIG. 5 is an exploded view showing some components of the battery module of FIG. 4.
FIG. 6 is a drawing showing the coupling of the battery module of FIG. 4 and a spacer.
FIG. 7 is a drawing showing a modified embodiment of FIG. 6.
FIG. 8 is a drawing showing another modified embodiment of FIG. 6.
FIG. 9 is a drawing showing another modified embodiment of FIG. 6.
FIG. 10 is a drawing showing a modified embodiment of FIG. 7.
FIG. 11 is a drawing showing a modified embodiment of FIG. 8.
FIG. 12 is a cross-sectional view taken along the cutting line A-A' of FIG. 1.
FIG. 13 is a drawing showing a modified embodiment of FIG. 12.
FIG. 14 is a diagram showing the change in FIG. 12 when a thermal event occurs.
FIG. 15 is a drawing showing a battery module adjacent to the battery module of FIG. 14.
FIG. 16 is a drawing showing another modified embodiment of FIG. 6.
FIG. 17 is a drawing showing another modified embodiment of FIG. 7.
FIG. 18 is a drawing showing another modified embodiment of FIG. 8.
FIG. 19 is a drawing showing another modified embodiment of FIG. 12.
FIG. 20 is a diagram showing the change in FIG. 19 when a thermal event occurs.
FIG. 21 is a diagram showing the change of a venting gas when a thermal event occurs.
FIG. 22 is a drawing showing a modified embodiment of FIG. 21.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

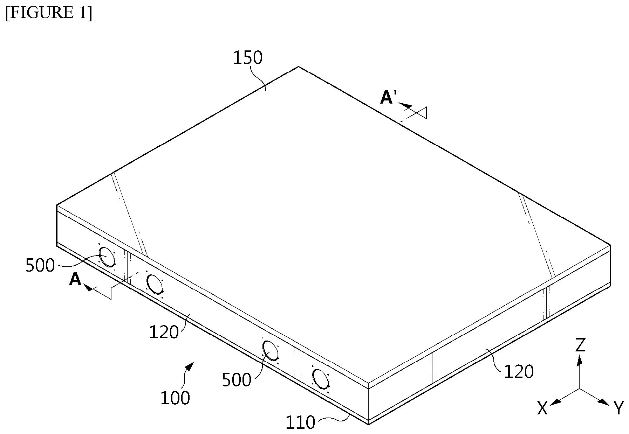

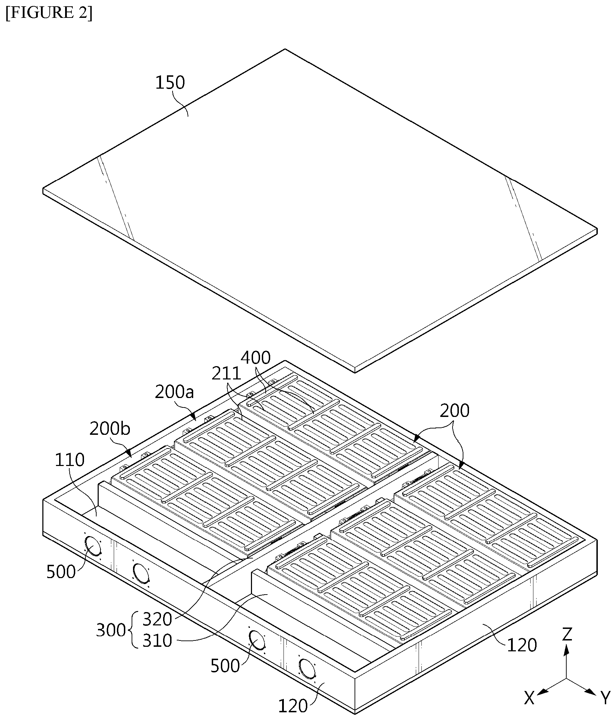

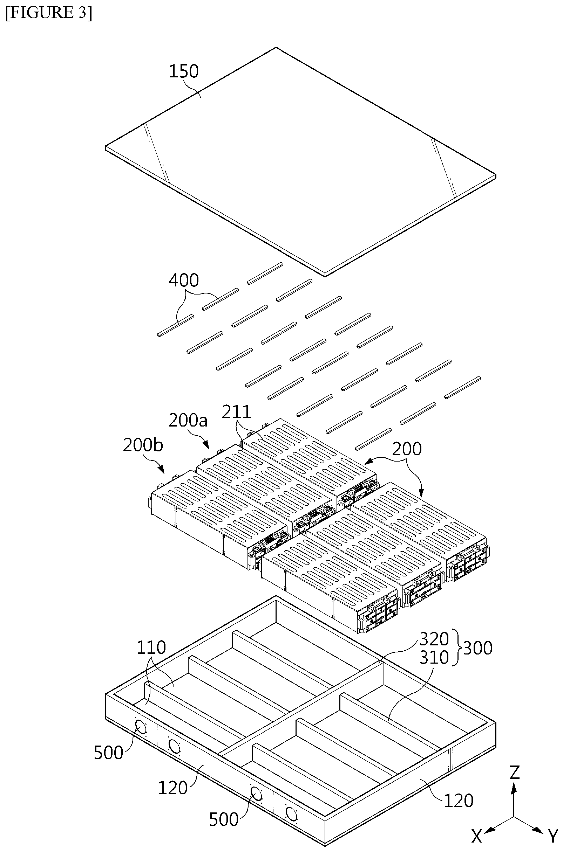

FIG. 1 is a diagram showing a battery pack according to an embodiment of the present disclosure. FIG. 2 is an exploded view showing some components of the battery pack of FIG. 1. FIG. 3 is an exploded view showing some components of the battery pack of FIG. 2.

Referring to FIGS. 1 to 4, the battery pack according to an embodiment of the present disclosure may include a case 100. The case 100 may form an outer appearance of the battery pack. The case 100 may have a rectangular parallelepiped shape. The case 100 may provide a space therein. The case 100 may include a pack cover 150. The pack cover 150 may have a square plate shape.

The battery module 200 may be positioned inside the case 100. The battery module 200 may have a top plate 210a facing the pack cover 150. The battery module 200 may have a rectangular parallelepiped shape.

The spacer 400 may be located inside the case 100. The spacer 400 may be located between the top plate 210a and the pack cover 150.

If a thermal event occurs from the battery module 200, the shape of the battery module 200 may be deformed. If a thermal event occurs from the battery module 200, the shape of the pack cover 150 may be deformed. The spacer 400 may secure a space between the battery module 200 and the pack cover 150 even if the battery module 200 or the pack cover 150 is deformed. The space between the battery module 200 and the pack cover 150 may be referred to as a venting space VS. A venting gas G discharged from the battery module 200 may flow through the space secured by the spacer 400. In addition, since the venting gas G that has flowed through the venting space VS is discharged to the outside of the battery pack, an explosion of the battery pack may be prevented.

Referring to FIGS. 1 to 3, the spacer 400 may be provided on the upper surface of the top plate 210a. The spacer 400 may be coupled, fastened, attached, or fixed to the upper surface of the top plate 210a. Alternatively, the spacer 400 may be formed integrally with the top plate 210a.

Alternatively, the spacer 400 may be provided on the inner surface of the pack cover 150. The spacer 400 may be coupled, fastened, attached or fixed to the inner surface of the pack cover 150. Alternatively, the spacer 400 may be formed integrally with the pack cover 150.

The spacer 400 is provided on the pack cover 150 or the top plate 210a to stably secure the space between the battery module 200 and the pack cover 150.

Referring to FIGS. 1 to 3, the case 100 may include a base plate 110. The base plate 110 may have a square shape. The base plate 110 may have a flat plate shape. The base plate 110 may form an outer appearance of the battery pack. The base plate 110 may provide an inner space of the battery pack.

The case 100 may include a side wall 120. The side wall 120 may be installed, fastened, coupled, fixed, or attached to the upper surface of the base plate 110. The side wall 120 may be composed of four pieces. The side wall 120 may be arranged along the perimeter of the base plate 110. The side wall 120 may form the outer appearance of the battery pack. The side wall 120 may provide an inner space.

The pack cover 150 may be installed, fastened, coupled, fixed or attached to the side wall 120. The pack cover 150 may cover the inner space of the battery pack.

The battery pack according to an embodiment of the present disclosure may include a venting device 500. The venting device 500 may be installed on the side wall 120. For example, the venting device 500 may be installed on the front side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

If a thermal event occurs from the battery module 200, the venting gas G may flow between the battery module 200 and the pack cover 150. Also, the venting gas G may be discharged to the outside of the battery pack through the venting device 500.

Referring to FIGS. 1 to 3, the battery pack may include a partition wall 300. The partition wall 300 may include a first partition wall 310 and a second partition wall 3230. The partition wall 300 may be provided in plurality. The partition wall 300 may be installed, fastened, fixed, coupled, or attached to the upper surface of the base plate 110. The partition wall 300 may partition an inner space of the battery pack. The battery module 200 may be positioned in the space partitioned by the partition wall 300.

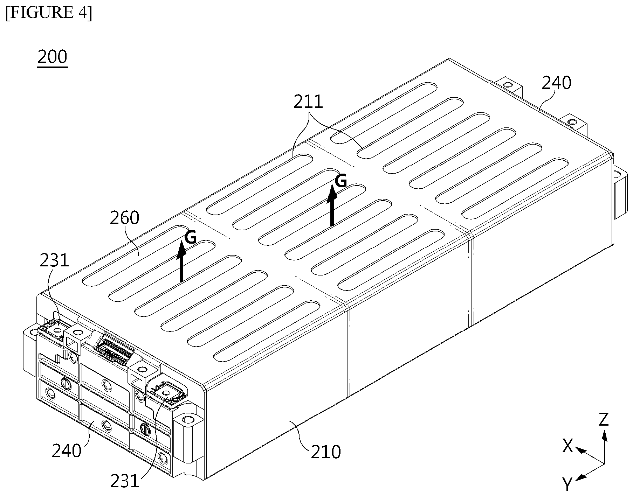

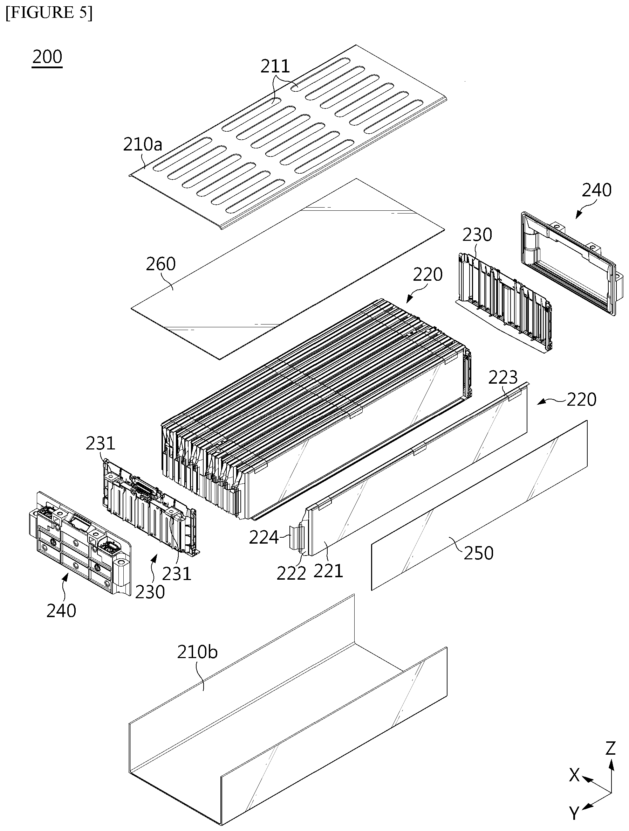

FIG. 4 is a drawing showing the battery module 200 of FIG. 3. FIG. 5 is an exploded view showing some components of the battery module 200 of FIG. 4.

Referring to FIGS. 4 and 5, the battery module 200 may include a frame 210. The frame 210 may include a top plate 210a and a lower frame 210b. The frame 210 may provide a space therein. The lower frame 210b may include a bottom plate and a pair of side plates. The top plate 210a may be installed, fastened, coupled, fixed, or attached to the pair of side plates. For example, the top plate 210a may be coupled to the lower frame 210b by welding. The frame 210 may have an open shape at the front and rear sides. The top plate 210a may include a venting hole 211. The venting hole 211 may communicate the inside of the frame 210 and the outside.

If a thermal event occurs from the battery module 200, the venting gas G and ignitable particles P may be discharged to the outside of the frame 210 through the venting hole 211. Due to this, the top plate 210a or pack cover 150 may be deformed. The spacer 400 may stably secure the venting space VS even if the top plate 210a or the pack cover 150 is deformed.

Referring to FIGS. 4 and 5, the battery module 200 may include a battery cell 220. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality. The battery cell 220 may be accommodated inside the frame 210. The plurality of battery cells 220 may be stacked along the front and rear direction or the X-axis direction. The battery cell 220 may include an accommodation portion 221 having an electrode assembly, a first sealing portion 222 protruding to the left and right sides of the accommodation portion 221, and a second sealing portion 223 protruding upward from the accommodation portion 221. In addition, the battery cell 220 may include an electrode lead 224 protruding to the left and right sides of the first sealing portion 222, respectively. Each battery cell 220 may extend along the right and left direction or the Y-axis direction. The electrode lead 224 may protrude to the left and right sides of each accommodation portion 221.

The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The bus bar frame assembly 230 may be provided at the left and right sides of the plurality of battery cells 220, respectively. The bus bar frame assembly 230 may be electrically connected to the electrode leads 224 of the plurality of battery cells 220.

The pair of end covers 240 may be coupled to the left and right sides of the frame 210, respectively. The pair of end covers 240 may cover the left and right sides of the frame 210. The end covers 240 may have a square shape.

The inner cover 260 may be positioned between the top plate 210a and the plurality of battery cells 220. The inner cover 260 may be installed, fastened, fixed, coupled, or attached to the inner surface of the top plate 210a. The inner cover 260 may cover the venting hole 211. When a thermal event occurs from the battery cell 220, the inner cover 260 may be ruptured by the venting gas G or ignitable particles. The venting gas G may be discharged to the outside of the frame 210 through the venting hole 211. The inner cover 260 may block the venting gas G generated from the outside of the battery module 200 from flowing into the frame 210.

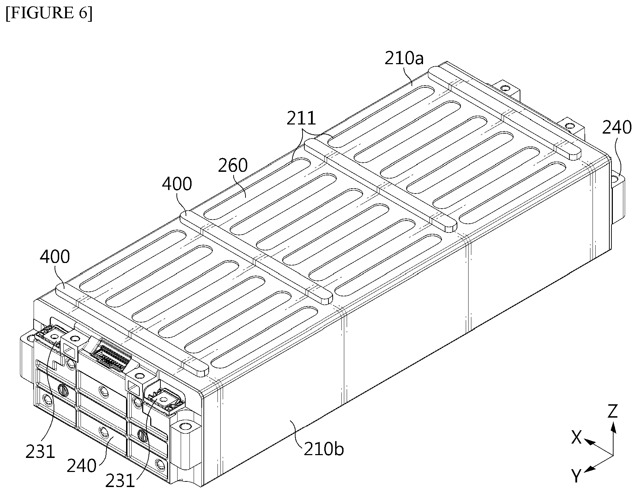

FIG. 6 is a drawing showing the coupling of the battery module 200 of FIG. 4 and a spacer 400.

Referring to FIGS. 2 and 6, the spacer 400 may be elongated along the front or rear direction or the X-axis direction. The spacer 400 may extend toward the side wall 120. Alternatively, the spacer 400 may extend toward the venting device 500. The spacer 400 may be provided in plurality. The plurality of spacers 400 may be arranged along the right and left direction or the Y-axis direction.

A venting hole 211 may be arranged between adjacent spacers 400. The venting hole 211 may be provided in plurality. The plurality of venting holes 211 may be arranged along the front or rear direction or the X-axis direction.

The spacer 400 may secure a venting space VS so that the venting gas G discharged through the venting hole 211 flows in at least one direction among the front or rear direction, the X-axis direction, the direction toward the side wall 120, or the direction toward the venting device 500.

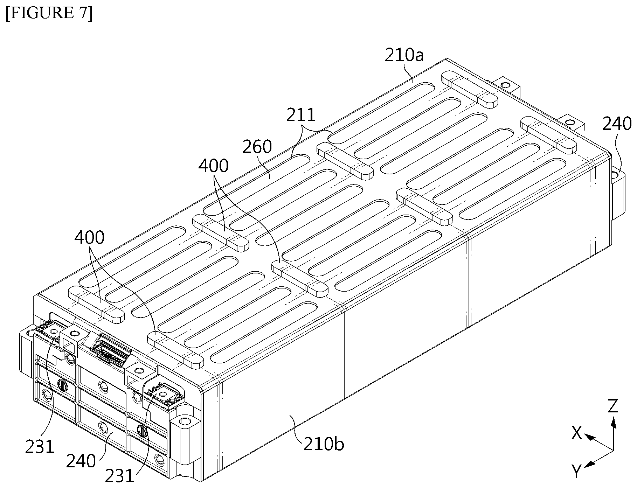

FIG. 7 is a drawing showing a modified embodiment of FIG. 6.

Referring to FIGS. 2 and 7, the plurality of spacers 400 may be arranged along the front or rear direction or the X-axis direction. The plurality of spacers 400 may be arranged along the direction toward the side wall 120. Alternatively, the plurality of spacers 400 may be arranged along the direction toward the venting device 500.

Also, the plurality of spacers 400 may be arranged along the right and left direction or the Y-axis direction.

The plurality of spacers 400 may secure the venting space VS so that the venting gas G discharged through the venting hole 211 flows in at least one direction among the front or rear direction, the X-axis direction, the direction toward the side wall 120, or the direction toward the venting device 500.

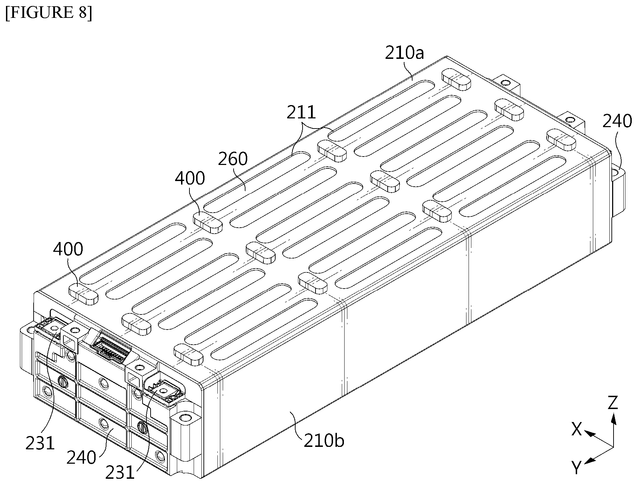

FIG. 8 is a drawing showing another modified embodiment of FIG. 6. Referring to FIGS. 2 and 8, the plurality of spacers 400 may be arranged along the front or rear direction or the X-axis direction. The plurality of spacers 400 may be arranged along the direction toward the side wall 120. Alternatively, the plurality of spacers 400 may be arranged along the direction toward the venting device 500. Compared to the embodiment of FIG. 7, the spacer 400 of FIG. 8 may have a shorter length. Since the spacer 400 has a shorter length, a wider venting space VS may be secured.

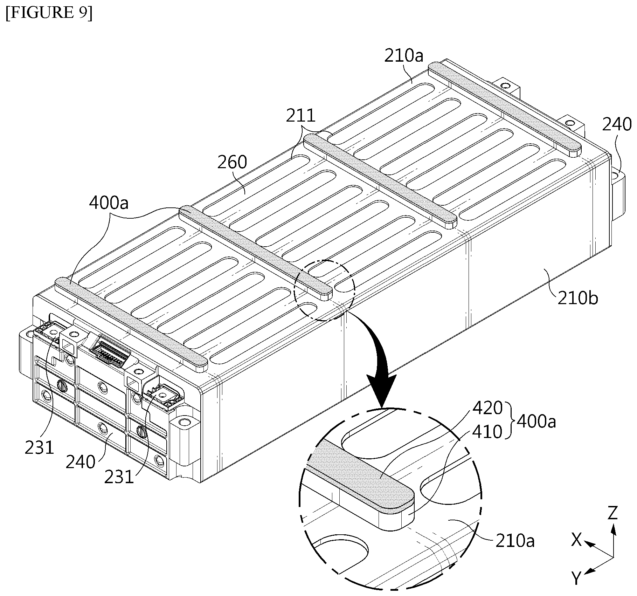

FIG. 9 is a drawing showing another modified embodiment of FIG. 6.

Referring to FIG. 9, the spacer 400 may include a first part 410 containing a metal material. The first part 410 may contain a metal material having high heat resistance. For example, the first part 410 may contain a steel material. The first part 410 may be provided on the upper surface of the top plate 210a.

The spacer 400 may include a second part 420. The second part 420 may contain an elastic material. For example, the second part 420 may contain at least one of silicone, urethane, or polyurethane. The second part 420 may be disposed at the upper surface of the first part 410. The second part 420 may be installed, fastened, fixed, coupled, or attached to the first part 410. The second part 420 may be located between the first part 410 and the pack cover 150.

Alternatively, the first part 410 may be provided on the inner surface of the pack cover 150. The second part 420 may be arranged at the lower surface of the first part 410. The second part 420 may be located between the top plate 210a and the first part 410.

The spacer 400 may be compressed between the battery module 200 and the pack cover 150. By compressing the spacer 400, the assembly tolerance of the battery pack may be absorbed. By compressing the spacer 400, the friction between the battery module 200 and the pack cover 150 may be alleviated.

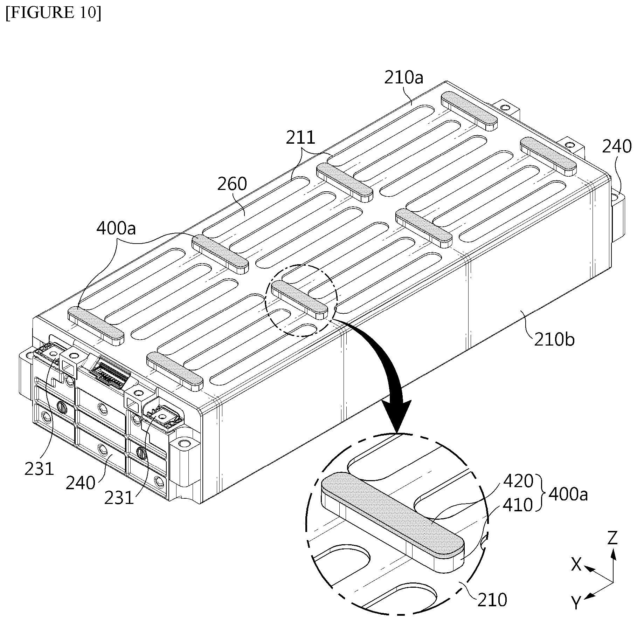

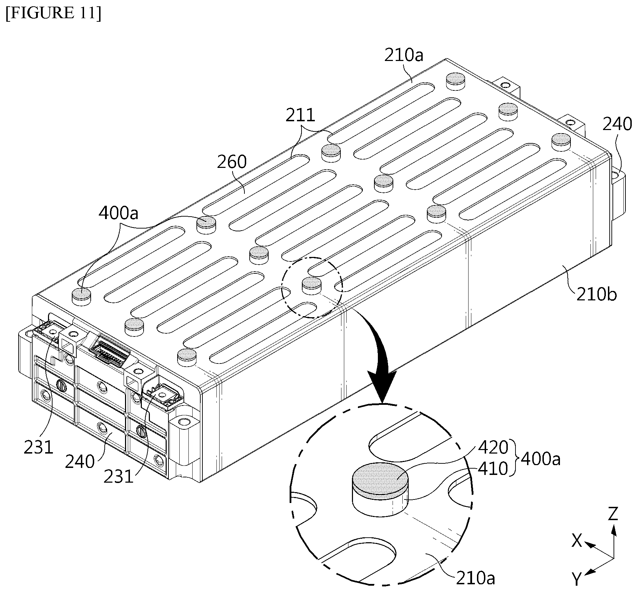

FIG. 10 is a drawing showing a modified embodiment of FIG. 7. FIG. 11 is a drawing showing a modified embodiment of FIG. 8.

Referring to FIGS. 10 and 11, the plurality of spacers 400 may include a first part 410 and a second part 420, respectively. The plurality of spacers 400 may be compressed between the battery module 200 and the pack cover 150, respectively. By compressing the plurality of spacers 400, the assembly tolerance of the battery pack may be more effectively absorbed. By compressing the plurality of spacers 400, the friction between the battery module 200 and the pack cover 150 may be more effectively alleviated.

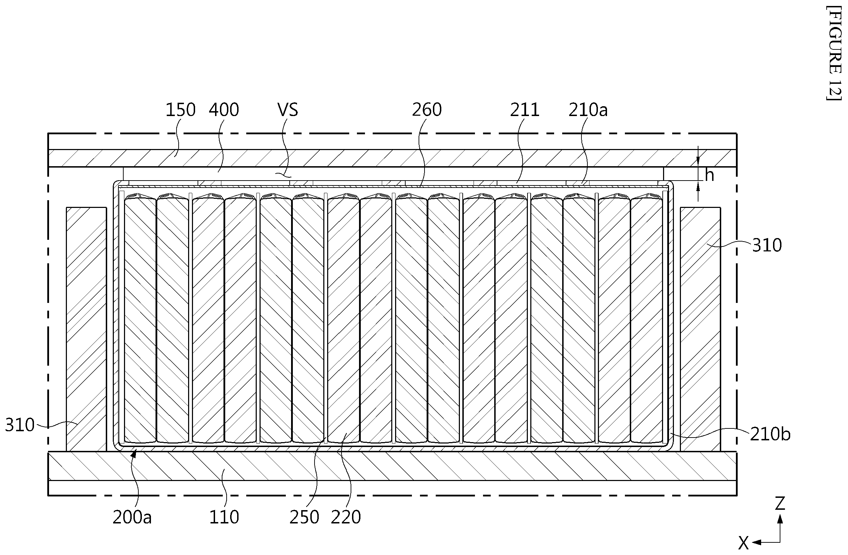

FIG. 12 is a cross-sectional view taken along the cutting line A-A' of FIG. 1.

Referring to FIG. 12, the spacer 400 may be in contact with the top plate 210a. The spacer 400 may be in contact with the inner surface of the pack cover 150. The venting space VS may be secured as much as the height (h) of the spacer 400.

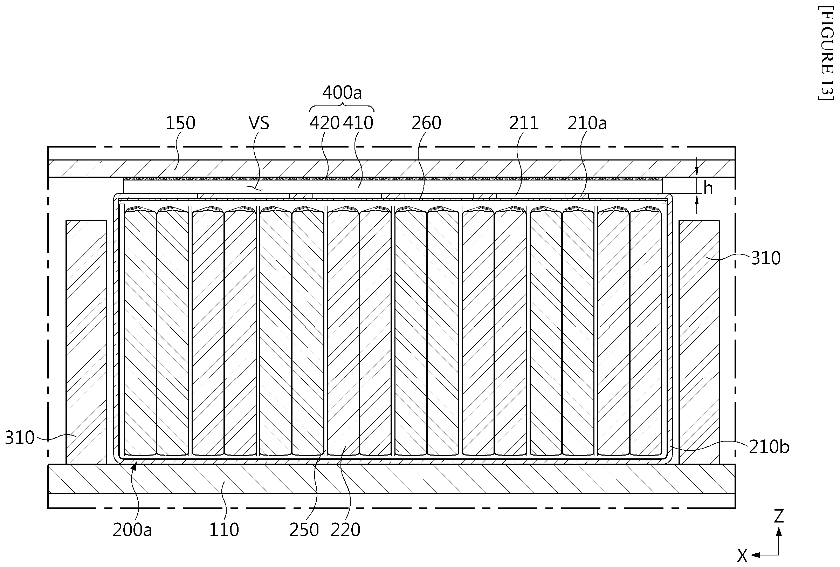

FIG. 13 is a drawing showing a modified embodiment of FIG. 12.

Referring to FIG. 13, the spacer 400 may be compressed between the pack cover 150 and the top plate 210a. The venting space VS may be secured as much as the height (h) of the spacer 400.

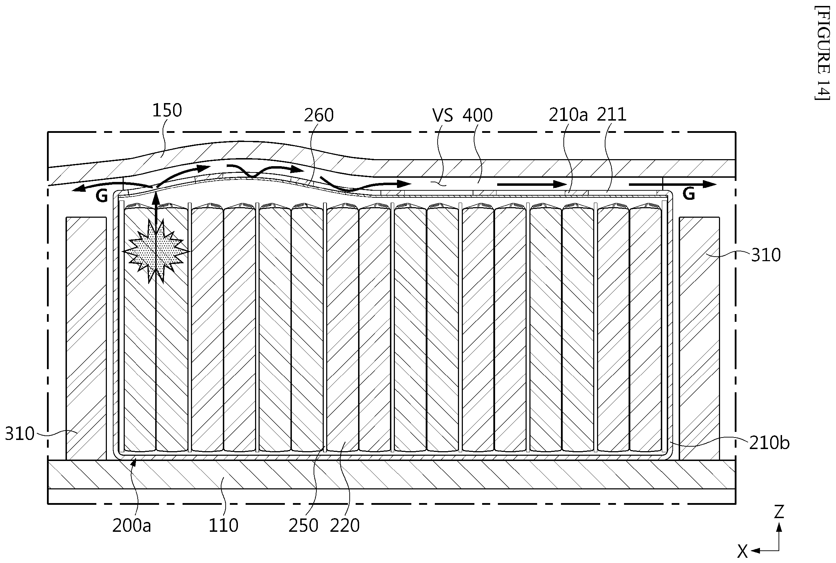

FIG. 14 is a diagram showing the change in FIG. 12 when a thermal event occurs.

Referring to FIGS. 2 and 14, the battery module 200a in which a thermal event occurs may discharge the venting gas G through the venting hole 211. Due to the high-temperature heat, the shape of the battery module 200a may be deformed. For example, the top plate 210a may protrude outward or in the +Z-axis direction. Due to the high-temperature heat, the shape of the pack cover 150 may be deformed. For example, the pack cover 150 may protrude outward or in the +Z-axis direction. At this time, the spacer 400 may secure the gap or space between the top plate 210a and the pack cover 150. As a result, the venting space VS may be secured. The venting gas G discharged through the venting hole 211 may flow along the venting space VS.

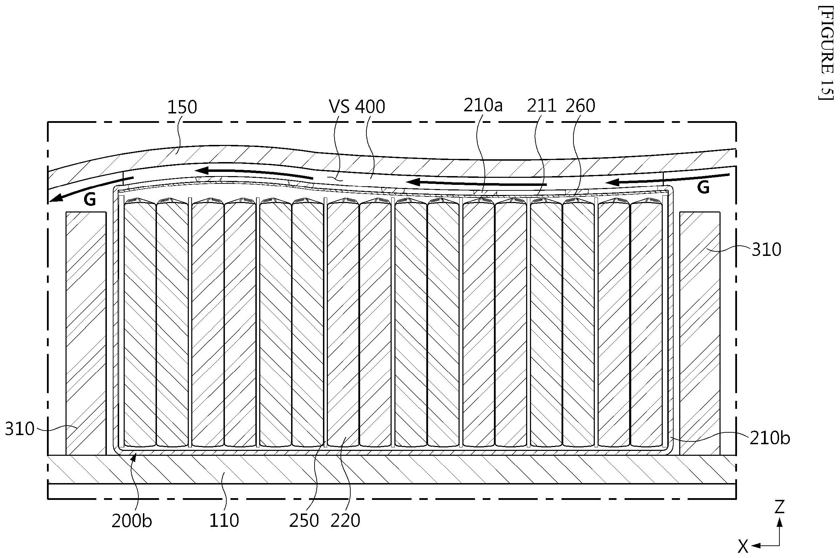

FIG. 15 is a drawing showing a battery module 200b adjacent to the battery module 200a of FIG. 14.

Referring to FIGS. 2 and 15, the shape of battery module 200b adjacent to battery module 200a where a thermal event occurs may be deformed. For example, the top plate 210a may be sunk inward or in the -Z-axis direction. The shape of a portion of the pack cover 150 facing the battery module 200b may be deformed. For example, the pack cover 150 may be sunk inward or in the -Z-axis direction. At this time, the spacer 400 may secure the gap or space between the top plate 210a and the pack cover 150. As a result, the venting space VS may be secured. The venting gas G discharged from the battery module 200a may flow along the venting space VS between the battery module 200b and the pack cover 150.

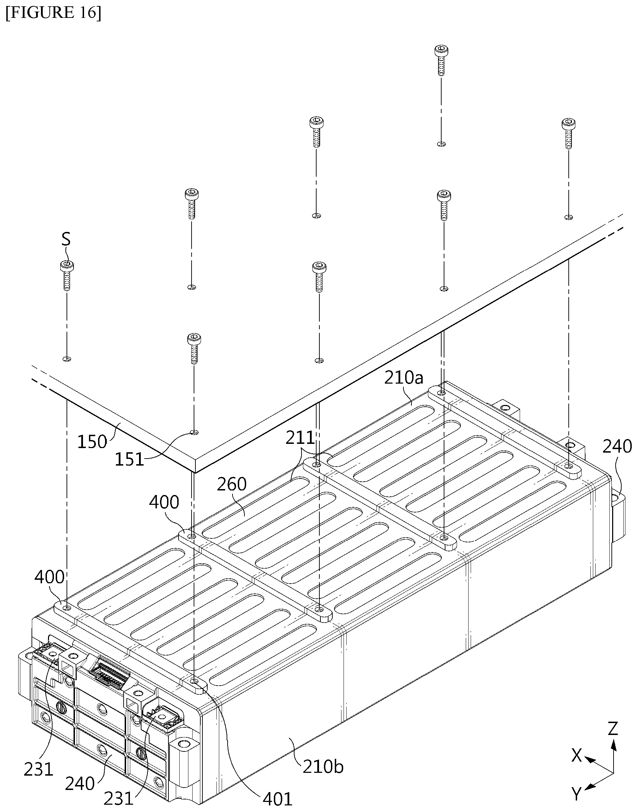

FIG. 16 is a drawing showing another modified embodiment of FIG. 6.

Referring to FIGS. 2 and 16, the spacer 400 may have a second fastening hole 401 formed in the upper surface. The second fastening hole 401 may be provided at both sides in the length direction of the spacer 400. The second fastening hole 401 may be provided for each spacer 400. The pack cover 150 may have a first fastening hole 151. The first fastening hole 151 may be provided in plurality. The first fastening hole 151 may be provided to correspond in one-to-one relationship with the second fastening hole 401. The first fastening hole 151 may face the second fastening hole 401. A fastening member S may pass through the first fastening hole 151. The fastening member S may be fastened, coupled, fixed, or attached to the second fastening hole 401. The fastening member S may be provided in plurality. The fastening member S may be provided to correspond in one-to-one relationship with the first fastening hole 151. The fastening member S may be provided to correspond in one-to-one relationship with the second fastening hole 401.

The fastening member S may couple the spacer 400 and the pack cover 150. By coupling the spacer 400 and the pack cover 150, the venting space VS may be stably secured.

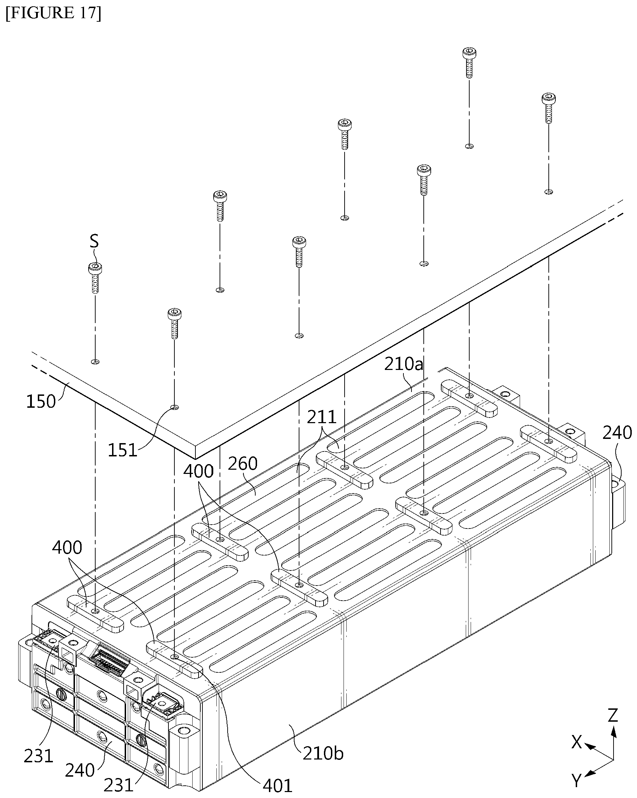

FIG. 17 is a drawing showing another modified embodiment of FIG. 7.

Referring to FIGS. 2 and 17, the plurality of spacers 400 may be arranged along the front or rear direction or the X-axis direction. A second fastening hole 401 may be provided for each spacer 400. The fastening member S may be coupled to each spacer 400.

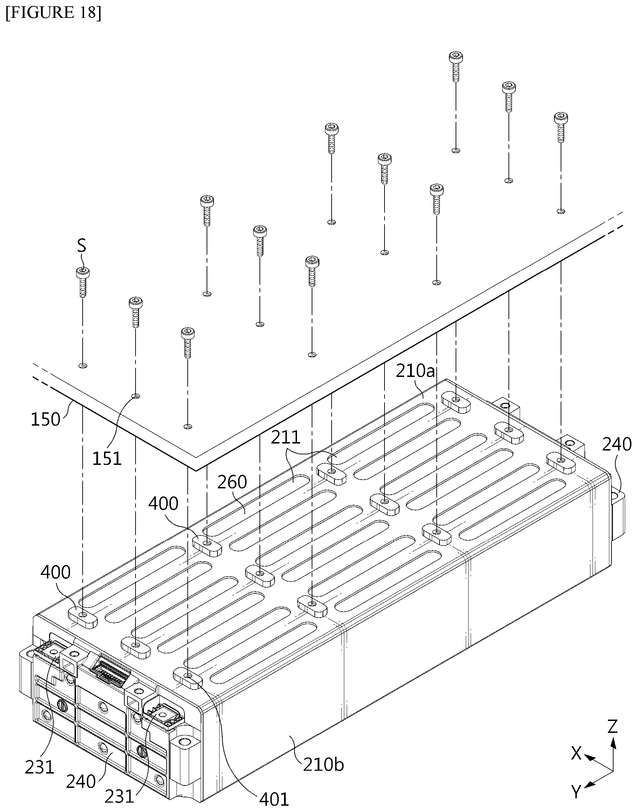

FIG. 18 is a drawing showing another modified embodiment of FIG. 8.

Referring to FIGS. 2 and 18, the plurality of spacers 400 may be arranged along the front or rear direction or the X-axis direction. The second fastening hole 401 may be provided for each spacer 400. The fastening member S may be coupled for each spacer 400. Compared to the embodiment of FIG. 17, the spacer 400 of FIG. 18 may have a shorter length. Since the spacer 400 has a shorter length, a larger number of fastening members S may be provided. By providing a larger number of fastening members S, the venting space VS may be secured more stably.

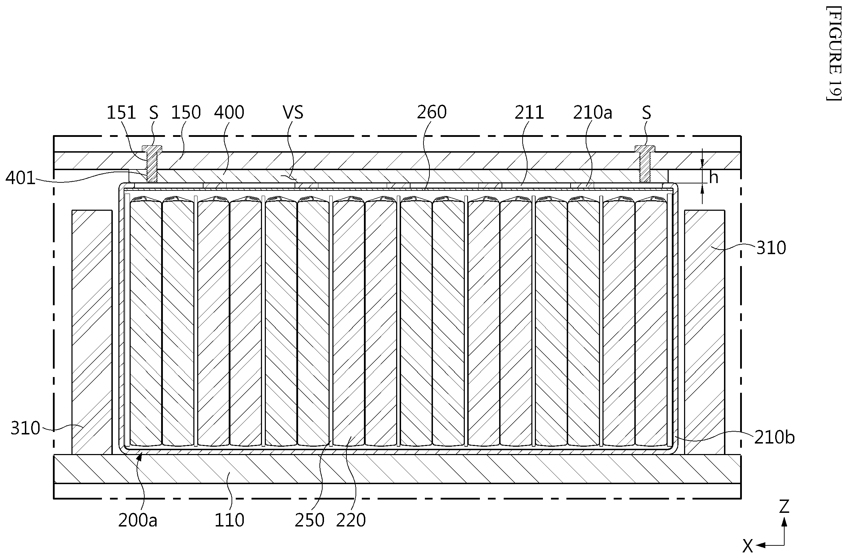

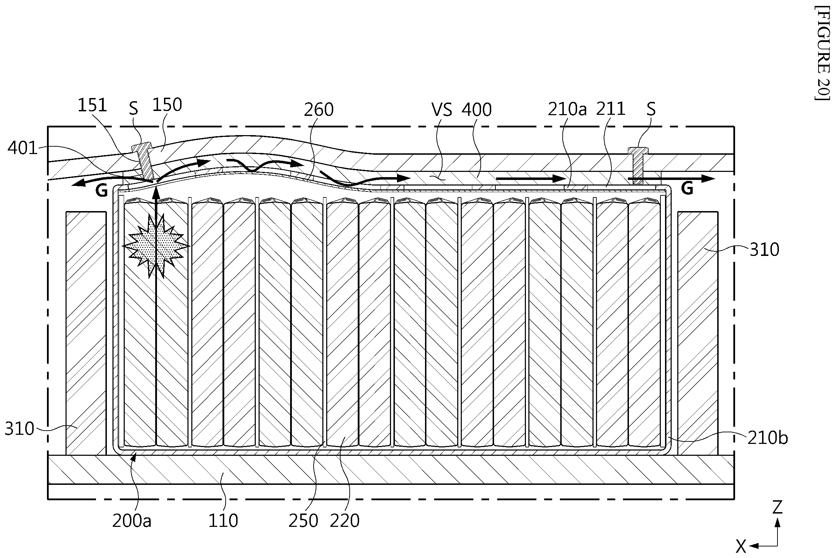

FIG. 19 is a drawing showing another modified embodiment of FIG. 12. FIG. 20 is a diagram showing the change in FIG. 19 when a thermal event occurs.

Referring to FIGS. 19 and 20, the fastening member S may couple the pack cover 150 and the spacer 400. The fastening member S may couple the pack cover 150 and the battery module 200a.

The battery module 200a in which a thermal event occurs may discharge the venting gas G through the venting hole 211. Due to high-temperature heat, the shape of the battery module 200a may be deformed. For example, the top plate 210a may protrude outward or in the +Z-axis direction. Due to high-temperature heat, the shape of the pack cover 150 may be deformed. For example, the pack cover 150 may protrude outward or in the +Z-axis direction. At this time, the fastening member S may maintain the coupling state of the spacer 400 and the pack cover 150. Alternatively, the fastening member S may maintain the coupling state of the battery module 200a and the pack cover 150. The spacer 400 may secure the gap or space between the top plate 210a and the pack cover 150. As a result, the venting space VS may be secured. The venting gas G discharged through the venting hole 211 may flow along the venting space VS.

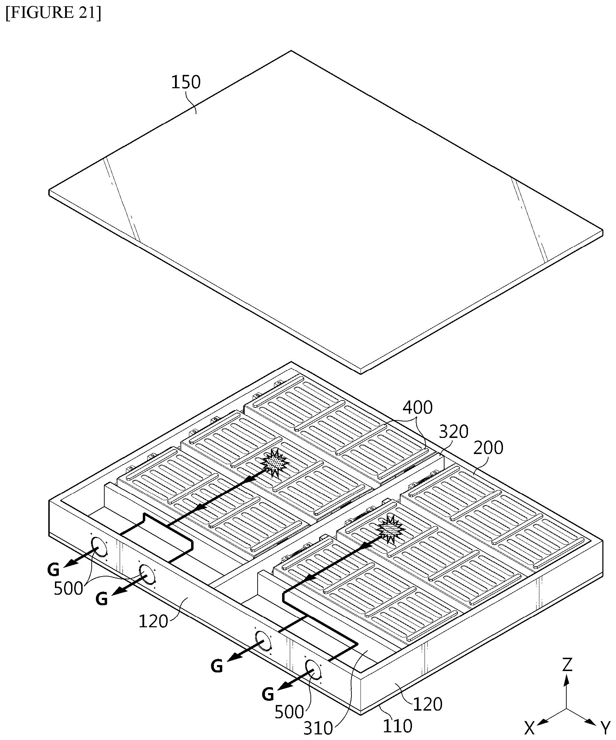

FIG. 21 is a diagram showing the change of a venting gas G when a thermal event occurs.

Referring to FIG. 21, the venting gas G discharged from one battery module 200 may flow along the venting space VS between the battery module 200 and the pack cover 150. The venting gas G may flow along the front or rear direction or the X-axis direction. The venting gas G may be discharged to the outside of the battery pack through the venting device 500.

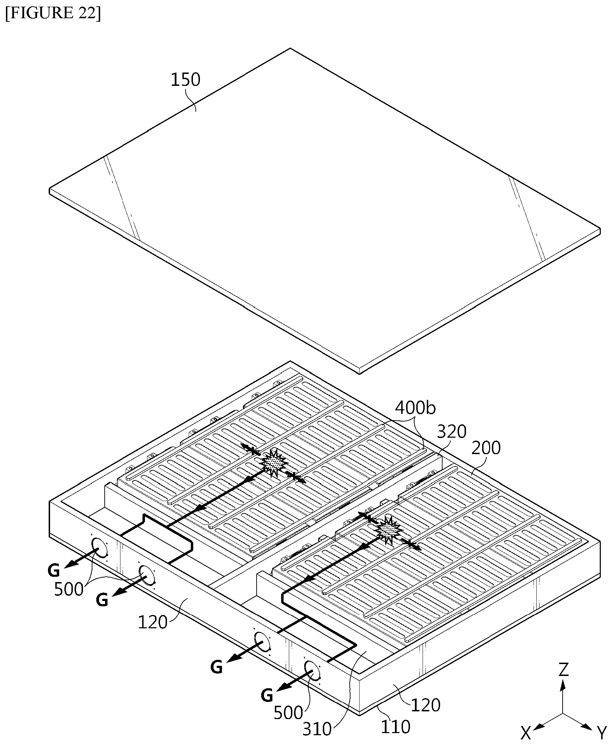

FIG. 22 is a drawing showing a modified embodiment of FIG. 21.

Referring to FIG. 22, the spacer 400 may be elongated in the front or rear direction or the X-axis direction. The spacer 400 may be positioned between the plurality of battery modules 200 and the pack cover 150. For example, one spacer 400 may be in contact with four battery modules 200. By forming the spacer 400 long, the spacer 400 may partition the venting space VS. For example, the spacer 400 may partition the venting space VS in the front or rear direction or the X-axis direction. The spacer 400 may guide the flow of the venting gas G. By partitioning the venting space VS and guiding the flow of the venting gas G by the spacer 400, the propagation of a thermal event may be effectively suppressed.

In addition, the battery pack according to the present disclosure may further include various components, for example components of the battery pack known at the time of filing of this application, such as a BMS, a bus bar, a relay, a current sensor, etc. in addition to the battery module.

The battery pack according to the present disclosure may be applied to a vehicle, such as an electric vehicle or a hybrid electric vehicle. That is, the vehicle according to the present disclosure may include the battery pack according to the present disclosure. Also, the vehicle according to the present disclosure may further include various other components included in the vehicle in addition to the battery pack. For example, the vehicle according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing a space therein and having a pack cover;
a battery module positioned inside the case and having a top plate facing the pack cover; and
a spacer positioned between the top plate and the pack cover.

2. The battery pack according to claim 1,
wherein the spacer is provided on an upper surface of the top plate or an inner surface of the pack cover.

3. The battery pack according to claim 1,
wherein a venting hole is formed in the top plate.

4. The battery pack according to claim 1,
wherein the spacer includes:
a first part containing a metal material; and
a second part provided on an upper surface or a lower surface of the first part and having elasticity.

5. The battery pack according to claim 4,
wherein the spacer is compressed between the top plate and the pack cover.

6. The battery pack according to claim 1,
wherein the case includes:
a base plate;
a side wall installed on the base plate; and
a venting device installed at the side wall.

7. The battery pack according to claim 6,
wherein the spacer extends toward the side wall or the venting device.

8. The battery pack according to claim 6,
wherein the spacer is provided in plurality, and
wherein the plurality of spacers are arranged along a direction toward the side wall or the venting device.

9. The battery pack according to claim 1,
wherein the battery module is provided in plurality, and
wherein the spacer is elongated to be positioned between the plurality of battery modules and the pack cover.

10. The battery pack according to claim 1, further comprising:
a fastening member configured to pass through the pack cover and fastened to the spacer.

11. A vehicle comprising the battery pack according to any one of claims 1 to 10.
